# EUROPÄISCHE PATENTANMELDUNG

(11) **EP 0 930 689 A2**
(43) Veröffentlichungstag der Anmeldung: **21.07.1999**
(21) Anmeldenummer: 99100685.9
(22) Anmeldetag: 15.01.1999
(51) Int. Cl.: H02J 9/06

(54) **Vorrichtung zur Stromversorgung eines elektronischen Gerätes**

(30) Priorität: 15.01.1998 DE 19801196
(71) Anmelder: GRUNDIG Aktiengesellschaft, D-90748 Fürth (DE)
(72) Erfinder: Kays, Ruediger c/o GRUNDIG AG, 90762 Fuerth (DE)

(57) **Zusammenfassung**

Die Erfindung betrifft eine Vorrichtung zur Stromversorgung eines elektronischen Gerätes, zu dessen Stromversorgung ein eine Primärseite und eine Sekundärseite aufweisendes Netzteil vorgesehen ist, welches Netzteil eingangsseitig an eine Wechselspannungsquelle anschließbar ist und welches ausgangsseitig eine oder mehrere Gleichspannungen zur Verfügung stellt. Weiterhin weist die Vorrichtung eine Steuerschaltung auf, mittels derer das Netzteil primärseitg abschaltbar und ein Akkumulator zur Übernahme der Stromversorgung des elektronischen Gerätes aktivierbar ist. Mittels dieser Vorrichtung wird erreicht, daß sowohl die Störstrahlung als auch Brummstörungen reduziert sind, wenn sich der Benutzer in der Nähe aufhält.

## Beschreibung

Die Erfindung betrifft eine Vorrichtung zur Stromversorgung eines elektronischen Gerätes, zu dessen Stromversorgung ein eine Primärseite und eine Sekundärseite aufweisendes Netzteil vorgesehen ist, welches Netzteil eingangsseitig an eine Wechselspannungsquelle anschließbar ist und welches ausgangsseitig eine oder mehrere Gleichspannungen zur Verfügung stellt.

Bei heute üblichen Netzteilen treten im ausgeschalteten Zustand des jeweiligen Gerätes Brummgeräusche auf, die vom Benutzer als störend empfunden werden. Weiterhin haben eine Vielzahl von Veröffentlichungen zum Thema Elektrosmog zu einer erheblichen Verunsicherung der Verbraucher geführt. Die Auswirkungen elektrischer und magnetischer Felder geringer Feldstärke auf den menschlichen Organismus werden selbst in Fachkreisen kontrovers diskutiert. In diesem Zusammenhang ist beispielsweise der Zeitschrift "Funkschau", 1997, Heft 6, Seiten 84 - 88, die Aussage entnehmbar, daß kerngesunde Menschen offenbar relativ wenig zu befürchten haben, während anderweitig vorgeschädigte Personen sehr wohl gefährdet seien.

Ausgehend von diesem Stand der Technik liegt der Erfindung die Aufgabe zugrunde, eine Vorrichtung mit den im Oberbegriff des Anspruchs 1 angegebenen Merkmalen derart weiterzubilden, daß die vorstehend beschriebenen Nachteile reduziert werden.

Diese Aufgabe wird bei einer Vorrichtung mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung ergeben sich aus den abhängigen Ansprüchen.

Die Vorteile der Erfindung bestehen insbesondere darin, daß mittels der beanspruchten Vorrichtung die Störstrahlung und die genannten Brummgeräusche immer dann herabgesetzt sind, wenn sich der Benutzer in der Nähe aufhält.

Diese Herabsetzung der Störstrahlung und der Brummgeräusche kann in vorteilhafter Weise entweder unter Verwendung einer programmierbaren Timerschaltung, wie sie im Anspruch 2 angegeben ist, oder eines Bewegungsdetektors, wie er Gegenstand des Anspruchs 3 ist, erfolgen. Handelt es sich bei dem elektronischen Gerät beispielsweise um ein Uhrenradio, dann kann die Timerschaltung derart programmiert werden, daß das Netzteil zwischen 20. °°Uhr und 8.°°Uhr abgeschaltet ist und die Stromversorgung in dieser Zeit durch den Akkumulator erfolgt. Handelt es sich bei dem elektronischen Gerät beispielsweise um ein im Wohnzimmer aufgestelltes Radioempfangsgerät, dann kann durch die Verwendung des Bewegungsdetektors ermittelt werden, ob sich momentan Personen im Raum aufhalten. Ist dies der Fall, dann wird für diese Zeit das Netzteil abgeschaltet und die Stromversorgung des elektronischen Gerätes erfolgt durch den Akkumulator.

Wie im Anspruch 4 angegeben ist, kann es sich beim Netzteil um ein Steckernetzteil handeln, in welches der Akkumulator integriert ist. Ein derartiges Steckernetzteil kann zur Stromversorgung verschiedenartiger elektronischer Geräte verwendet werden.

Durch die im Anspruch 10 angegebenen Merkmale wird erreicht, daß der Akkumulator während der Zeiträume, in denen sich das Netzteil im eingeschalteten Zustand befindet, über eine Ladeschaltung aufgeladen wird.

Weitere vorteilhafte Eigenschaften der Erfindung ergeben sich aus der nachfolgenden beispielhaften Erläuterung anhand der Figuren.

Es zeigen:
- Fig. 1: ein erstes Ausführungsbeispiel für eine Vorrichtung zur Stromversorgung eines elektronischen Gerätes,
- Fig. 2: ein zweites Ausführungsbeispiel für eine Vorrichtung zur Stromversorgung eines elektronischen Gerätes,
- Fig. 3: ein Ausführungsbeispiel für eine Vorrichtung zur Stromversorgung eines elektronischen Gerätes mit separatem Netzteil und im Gerät integriertem Akkumulator mit Ladeschaltung und
- Fig. 4: ein Ausführungsbeispiel für eine Vorrichtung zur Stromversorgung eines elektronischen Gerätes mit separatem Netzteil und im Gerät integriertem Akkumulator.

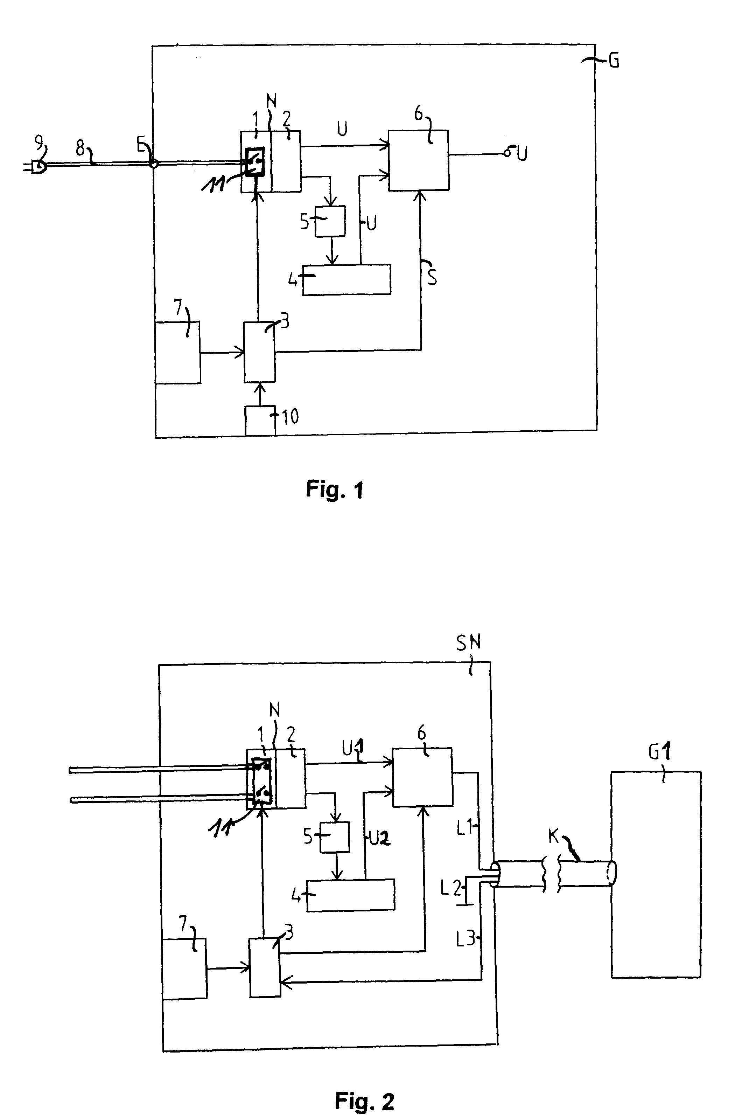

Die Figur 1 zeigt ein erstes Ausführungsbeispiel für eine Vorrichtung zur Stromversorgung eines elektronischen Gerätes G. Dieses weist einen Netzeingang E auf, über welchen das Gerät mittels eines Netzkabels 8 und eines Netzsteckers 9 an das Wechselstromnetz anschließbar ist. Vom Netzeingang E aus wird das Wechselspannungssignal über einen Schalter 11 an die Primärseite 1 eines Netzteiles N geführt. Die Primärseite 1 ist über einen nicht dargestellten Transformator an die Sekundärseite 2 des Netzteils angekoppelt. An einem der Ausgänge des Netzteils wird eine Gleichspannung U zur Versorgung der Verbraucher des elektronischen Gerätes zur Verfügung gestellt.

Ein weiterer Ausgang des Netzteils N ist über eine Ladeschaltung 5 mit einem Akkumulator 4 verbunden. Dieser liefert an seinem Ausgang ebenfalls eine Gleichspannung U.

Die vom Netzteil N und vom Akkumulator 4 gelieferten Gleichspannungen U werden einer Schalteinheit 6 zugeführt, welche in Ansprache auf ein Steuersignal S für eine dieser beiden Gleichspannungen durchlässig wird, so daß am Ausgang der Schalteinheit 6 eine dieser Gleichspannungen U für die Verbraucher des elektronischen Gerätes zur Verfügung steht.
Zur Generierung des Steuersignals S ist eine Steuerschaltung 3 vorgesehen, bei der es sich vorzugsweise um einen Mikrocomputer handelt. Dem Mikrocomputer werden Signale von der Bedieneinheit 7 des elektronischen Gerätes und von einem Bewegungsdetektor 10 zugeführt.

In einer ersten Betriebsart übt die Steuerschaltung 3 die Funktion einer programmierbaren Timerschaltung aus. Zu diesem Zweck gibt der Benutzer mittels der Ziffemtasten der Bedieneinheit 7 diejenigen Zeiten ein, zu denen das Netzteil N primärseitig über den Schalter 11 abgeschaltet und auch wieder eingeschaltet werden soll. Beispielsweise kann die Abschaltzeit 20.°° Uhr und die Einschaltzeit 8.°° Uhr sein. Dabei können die Einschalt- und die Abschaltzeit gemäß einer vorteilhaften Weiterbildung der Erfindung von einer bereits einprogrammierten Weckzeit abgeleitet sein. Beispielsweise stimmt die Einschaltzeit mit der Weckzeit überein und die Abschaltzeit wird im Mikrocomputer 3 durch eine automatische Subtraktion einer vorgegebenen Stundenzahl von der eingegebenen Weckzeit errechnet. Durch eine derartige Vorgabe der Zeiten kann sichergestellt werden, daß während der Schlafenszeit, während der sich der Benutzer in der Nähe des Uhrenradios aufhält, das Netzteil N abgeschaltet ist, so daß während dieser Zeit weder eine Störstrahlung noch Brummstörungen auftreten, wie sie bei heute üblichen Geräten insbesondere durch den Transformator im Netzteil verursacht werden.

In einer zweiten Betriebsart erzeugt die Steuerschaltung 3 das Steuersignal S zur Umschaltung der Schalteinheit 6 in Ansprache auf das Ausgangssignal des Bewegungsdetektors 10. Mittels dieses Bewegungsdetektors 10 wird erkannt, ob sich momentan Personen in der Nähe des elektronischen Gerätes aufhalten. Ist das nicht der Fall, dann bleibt das Netzteil N eingeschaltet. Sind Personen anwesend, dann erfolgt durch die Steuerschaltung 3 eine primärseitige Abschaltung des Netzteils N und eine Umschaltung der Schalteinheit 6 derart, daß diese für die vom Akkumulator 4 gelieferte Gleichspannung U durchlässig ist.

Bei beiden Betriebsarten erfolgt während der Zeiträume, in denen das Netzteil N eingeschaltet ist, eine Aufladung des Akkumulators 4 über die Ladeschaltung 5.

Die Figur 2 zeigt ein zweites Ausführungsbeispiel für eine Vorrichtung zur Stromversorgung eines elektronischen Gerätes G1. Bei diesem Ausführungsbeispiel ist das Netzteil als ein Steckernetzteil SN ausgebildet und mit dem elektronischen Gerät G1 über ein im Ausführungsbeispiel der Fig. 2 dreiadrig augebildetes Kabel K sowie über nicht dargestellte dreipolige vertauschungssichere Steckverbindungen verbunden. Der Akkumulator 4 ist in das Steckernetzteil SN integriert, so daß Steckernetzteil und Akkumulator eine bauliche Einheit bilden. Die Timerschaltung ist entweder ebenfalls in das Steckernetzteil SN integriert oder im elektronischen Gerät G1 vorgesehen und mit dem Steckernetzteil SN über eine Signalleitung L3 verbunden. Diese ist zusammen mit einer Leitung L1, die zur Übertragung der Gleichspannung U vorgesehen ist, und mit einer Leitung L2, über die ein Massesignal, welches die Massepotentiale des Steckernetzteils SN und des elektronischen Geräts G1 verbindet, übertragen wird, im dreiadrigen Kabel K vorgesehen. Über die Signalleitung L3 können auch weitere Daten zwischen dem Steckernetzteil SN und dem elektronischen Gerät G1 übertragen werden, beispielsweise Signale von einem Bewegungsdetektor (vgl. Fig. 1).

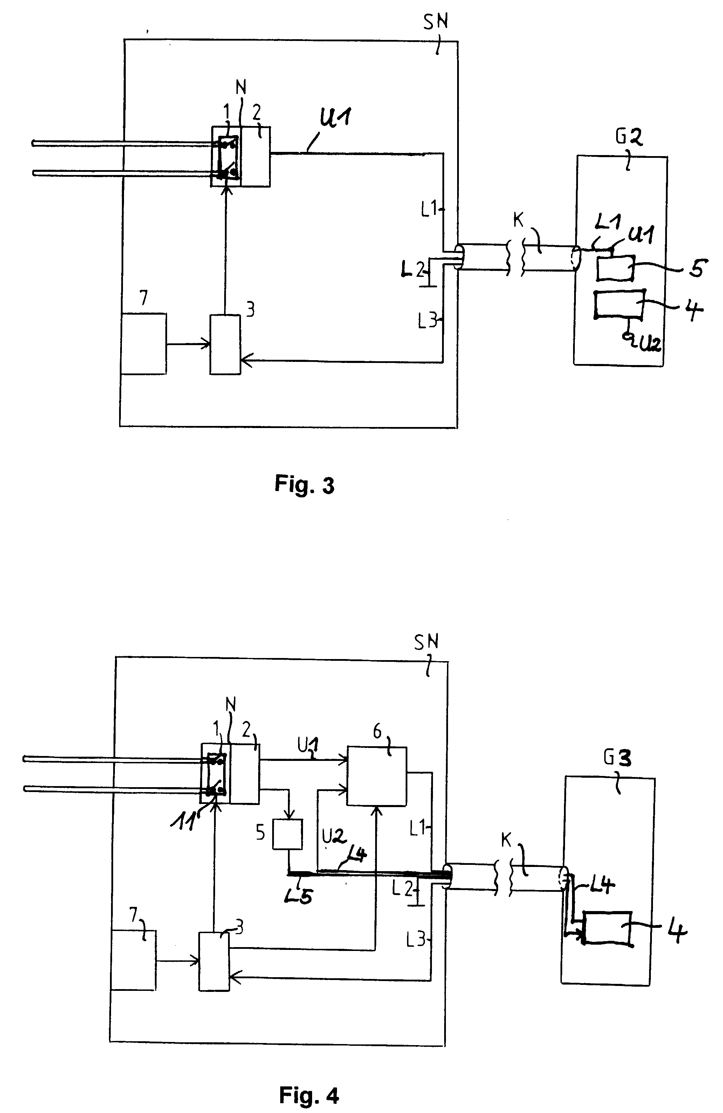

Fig. 3 zeigt ein Ausführungsbeispiel für eine Vorrichtung zur Stromversorgung eines elektronischen Gerätes G2 mit separatem Steckernetzteil SN und im elektronischen Gerät G2 integriertem Akkumulator 4 mit Ladeschaltung 5, wie dies beispielsweise bei Uhrenradios bereits bekannt ist. Das Steckernetzteil SN weist im Gegensatz zu einem konventionellen Steckernetzteil einen Schalter 11 auf, der zur primärseitigen Abschaltung der Netzspannung dient. Die Ansteuerung des Schalters 11 erfolgt über eine Steuerschaltung 3, die Steuersignale der im Steckernetzteil SN vorgesehenen Bedieneinheit 7 und/oder vom elektronischen Gerät G2 über eine Signalleitung L3 gelieferte Steuersignale auswertet.

Das in Fig. 3 dargestellte Schaltnetzteil SN ist somit auch als Ersatznetzteil für alle elektronischen Geräte einsetzbar, die einen integrierten Akku 4 mit Ladeschaltung 5 aufweisen. In einer ersten Betriebsart erfolgt dabei die Spannungsversorgung des elektronischen Geräts G2 mit Hilfe der aus der Nezuspannung abgeleiteten Gleichspannung U1, wobei der Schalter 11 in dieser Betriebsart geschlossen ist. In einer zweiten Betriebsart ist der Schalter 11 geöffnet und die Spannungsversorgung des elektronischen Geräts G2 erfolgt mittels der vom Akkumulator abgegebenen Spannung. In dieser Betriebsart kommt es zu einer Verringerung der Störstrahlung sowie zu einer Vermeidung möglicher Brummgeräusche. Darüberhinaus ist auch die Sicherheit beim Betrieb des elektronischen Geräts erhöht, da keine Erhitzung des Netzteils N auftreten kann.

Fig. 4 zeigt ein Ausführungsbeispiel für eine Vorrichtung zur Stromversorgung eines elektronischen Gerätes G2 mit separatem Steckernetzteil SN und im elektronischen Gerät G2 integriertem Akkumulator 4. Aus diesem Grund ist bei dem in Fig. 3 dargestellten Ausführungsbeispiel zwischen dem Steckernetzteil SN und dem elektronischen Gerät G2 ein fünfpoliges Verbindungskabel K vorgesehen, welches Signalleitungen L1, L2, L3, L4, L5 aufweist. Die Funktionen der Signalleitungen L1, L2, L3 entsprechen dabei den im Ausführungsbeispiel der Fig. 2 beschriebenen Funktionen. Über die Signalleitungen L4 erfolgt die Zuführung der Gleichspannung U an die Schalteinheit 5, während die Signalleitung L5 die Ladespannung aus der Ladeschaltung 5 dem Akkumulator 4 zuführt.

Neben den in den Fig. 1 bis 4 dargestellten Ausführungsbeispielen sind noch weitere Ausführungsformen von der vorliegenden Erfindung umfaßt, wie beispielsweise die Ausführungsform, daß neben dem im elektronischen Gerät angeordneten Akkumulator noch weitere erfindungsgemäße Komponenten wie Steuerschaltung 3, Bedieneinheit 7, Ladeschaltung 5 und/oder Schalteinheit 6 angeordnet sind.

## Patentansprüche

1. Vorrichtung zur Stromversorgung eines elektronischen Gerätes, zu dessen Stromversorgung ein eine Primärseite und eine Sekundärseite aufweisendes Netzteil vorgesehen ist, welches Netzteil eingangsseitig an eine Wechselspannungsquelle anschließbar ist und welches ausgangsseitig eine oder mehrere Gleichspannungen zur Verfügung stellt,
**dadurch gekennzeichnet,**
daß sie weiterhin eine Steuerschaltung (3) aufweist, mittels derer das Netzteil (N) primärseitig abschaltbar und ein Akkumulator (4) zur Übernahme der Stromversorgung des elektronischen Gerätes (G) aktivierbar ist.

2. Vorrichtung nach Anspruch 1,
**dadurch gekennzeichnet,**
daß die Steuerschaltung (3) eine programmierbare Timerschaltung aufweist.

3. Vorrichtung nach Anspruch 1 oder 2,
**dadurch gekennzeichnet,**
daß die Steuerschaltung (3) mit einem Bewegungsdetektor (10) verbunden ist.

4. Vorrichtung nach einem der vorhergehenden Ansprüche,
**dadurch gekennzeichnet,**
daß das Netzteil ein Steckernetzteil (SN) ist und der Akkumulator (4) mit dem Steckernetzteil (SN) eine bauliche Einheit bildet.

5. Vorrichtung nach einem der Ansprüche 1 bis 3,
**dadurch gekennzeichnet,**
daß das Netzteil ein Steckernetzteil (SN) ist und der Akkumulator (4) mit dem elektronischen Gerät (G2) eine bauliche Einheit bildet.

6. Vorrichtung nach Anspruch 4,
**dadurch gekennzeichnet,**
daß die Timerschaltung in das Steckernetzteil (SN) eingebaut ist.

7. Vorrichtung nach Anspruch 4,
**dadurch gekennzeichnet,**
daß die Timerschaltung im elektronischen Gerät vorgesehen und über eine Signalleitung (L3) mit dem Steckernetzteil (SN) verbunden ist.

8. Vorrichtung nach Anspruch 7,
**dadurch gekennzeichnet,**
daß das Steckernetzteil (SN) mit dem elektronischen Gerät (G') unter Verwendung einer dreipoligen Steckverbindung und eines dreiadrigen Kabels (K) verbunden ist.

9. Vorrichtung nach Anspruch 8,
**dadurch gekennzeichnet,**
daß die Steckverbindung eine vertauschungssichere Steckverbindung ist.

10. Vorrichtung nach einem der vorhergehenden Ansprüche,
**dadurch gekennzeichnet,**
daß der Akkumulator (4) über eine Ladeschaltung (5) mit dem Netzteil verbunden ist.

11. Vorrichtung nach einem der vorhergehenden Ansprüche,
**dadurch gekennzeichnet,**
daß die Steuerschaltung (3) eine Schalteinheit (6) derart ansteuert, daß bei primärseitig abgeschaltetem Netzteil (N) die Spannung (U2) des Akkumulators (4) zur Stromversorgung des elektronischen Geräts (G, G1, G2) vorgesehen ist.

12. Vorrichtung nach einem der vorhergehenden Ansprüche,
**dadurch gekennzeichnet,**
daß die Steuerschaltung (3) die Schalteinheit (6) derart ansteuert, daß bei primärseitig abgeschaltetem Netzteil (N) und bei einer einen vorgebbaren Grenzwert unterschreitenden Spannung (U2) das Netzteil (N) primärseitig eingeschaltet und die sekundärseitig vorliegende Gleichspannung (U1) zur Stromversorgung des elektronischen Geräts (G, G1, G2) vorgesehen ist.

13. Vorrichtung nach Anspruch 10,
**dadurch gekennzeichnet,**
daß das elektronische Gerät ein Uhrenradio ist.

14. Vorrichtung nach einem der vorhergehenden Ansprüche,
**dadurch gekennzeichnet,**
daß die Steuerschaltung (3) die Funktion einer programmierbaren Timerschaltung ausübt, wobei mittels einer Bedieneinheit (7) diejenigen Zeiten eingebbar sind, zu denen das Netzteil (N) primärseitig abgeschaltet und auch wieder eingeschaltet werden soll

15. Vorrichtung nach einem der vorhergehenden Ansprüche,
**dadurch gekennzeichnet,**
daß die Einschalt- und die Abschaltzeit des Netzteils (N) von einer einprogrammierten Weckzeit abgeleitet werden.
